# EUROPÄISCHE PATENTSCHRIFT

(11) **EP 2 163 492 B1**
(45) Veröffentlichungstag und Bekanntmachung des Hinweises auf die Patenterteilung: **23.01.2013**
(21) Anmeldenummer: 09169942.1
(22) Anmeldetag: 10.09.2009
(51) Int. Cl.: B65G 1/04, B65G 1/08

(54) **Kombiniertes Warenlager**
Combined warehouse
Entrepôt combiné

(30) Priorität: 11.09.2008 DE 202008012070 U
(43) Veröffentlichungstag der Anmeldung: 17.03.2010
(73) Patentinhaber: Gebr. Willach GmbH, 53809 Ruppichteroth (DE)
(72) Erfinder: Willach, Jens, 53783 Eitorf (DE); Schmitt, Werner, 53809 Ruppichteroth (DE)
(74) Vertreter: von Kreisler Selting Werner

(56) Entgegenhaltungen:
- EP-A1- 1 762 511
- DE-A1- 10 157 121
- DE-U1-202007 009 399

## Beschreibung

Die Erfindung betrifft ein kombiniertes Warenlager gemäß dem Oberbegriff des Anspruchs 1. Ein derartiges Warenlager ist aus der EP 1 762 511 A1 bekannt.

Ein weiteres kombiniertes Warenlager ist beschrieben in DE 20 2007 009 399 U. Hierbei ist ein Kanallagerautomat, bei welchem mehrere Gegenstände in einer Reihe in einem Kanal angeordnet sind, mit einem Manipulator versehen, der zum Einlagern von Gegenständen entlang der Rückseite der Kanäle gesteuert bewegbar ist, und mit einem weiteren Manipulator, der zur Entnahme von Gegenständen entlang der Frontseite der Kanäle gesteuert bewegbar ist. Außerdem ist ein Einzelplatzlagerautomat vorgesehen, der zum Einlagern und Auslagern von Gegenständen mit einem eigenen Manipulator versehen ist. Die Eingabe der Gegenstände kann mittels einer manuell bestückbaren Wareneingabevorrichtung erfolgen oder mittels eines Warenannahmeautomaten, der eine Einschütt-Eingabevorrichtung für Schüttwaren aufweist und ungeordnet eingegebene Gegenstände vereinzelt und identifiziert. Die Auslagerung von Gegenständen aus jedem der Lagerautomaten erfolgt mit Hilfe des jeweiligen Manipulators, der die Gegenstände einem Ausgabeförderer zuführt.

DE 10 157 121 A1 offenbart ein Lagersystem aus zwei verketteten Lagersystemen, wobei versenkbare Transferstationen zum Transport von Ladegut zur Entnahmestation vorgesehen sind.

In EP 1 409 376 B1 ist ein Warenlager beschrieben, das ein Einzelplatzlager ohne definierte Lagerfächer und ein Kanallager aufweist, die von demselben Manipulator bedient werden. Für das Einzelplatzlager muss der Manipulator mit einem Sauger bzw. mit einem Greifer ausgestattet sein, um die Waren einlagern und auslagern zu können. Für das Einzelplatzlager ist ein Ausgabemodul vorgesehen, und für das Kanallager sind eigene Ausgabemanipulatoren als Auslagerungsvorrichtungen vorhanden.

Ein Kanallager eignet sich besonders für Schnelldreher. Dies sind Produkte, die häufig verlangt werden. In einem Kanal können gleiche Produkte größerer Anzahl bereitgestellt werden. Für Langsamdreher, die seltener verlangt werden, werden in der Regel Einzelplatzlagerautomaten benutzt, bei denen jede Ware in einem eigenen Lagerfach deponiert wird. Üblicherweise sind beide Typen von Lagerautomaten autonom. Dies bedeutet, dass jeder Lagerautomat mit eigenen Manipulatoren versehen ist, die nur für diesen Lagerautomaten arbeiten. Die Manipulatoren sind von dem Lagerverwaltungsrechner des Warenlagers vollautomatisch gesteuert. Sie fahren die betreffenden Kanäle bzw. Lagerfächer an, um Waren einzulagern bzw. Waren zu entnehmen und führen die Waren vollautomatisch einer Ausgabevorrichtung zu. Die Manipulatoren erfordern einen hohen technischen Aufwand sowohl im Hinblick auf die Steuerung als auch auf die Bewegungsmechanik.

Der Erfindung liegt die Aufgabe zugrunde, ein kombiniertes Warenlager anzugeben, das mit einem verringerten technischen Aufwand auskommt.

Das kombinierte Warenlager nach der vorliegenden Erfindung ist durch den Anspruch 1 definiert.

Bei dem erfindungsgemäßen kombinierten Warenlager bedient der erste Manipulator die Eingabeseite des ersten Kanallagers und die kombinierte Eingabe- und Ausgabeseite des zweiten Kanallagers. Während das erste Kanallager für Schnelldreher bestimmt ist, ist das zweite Kanallager für Langsamdreher vorgesehen. Bei dem zweiten Kanallager sind die Kanäle generell von größerer Breite, denn sie sind nicht auf die Breite der einzulagernden Gegenstände exakt abgestimmt. Dies bedeutet, dass Gegenstände unterschiedlicher Größen in dem zweiten Kanallager eingelagert werden können, wobei in einem Kanal auch unterschiedliche Gegenstände in Reihe angeordnet werden. Die Ausgabe erfolgt nach dem Prinzip "First-in-Last-out", wenn vor der Ausgabe kein Umräumen stattfindet. Der Manipulator braucht weder einen Saugnapf noch einen Greifer aufzuweisen. Er schiebt mit einem Schieber die Gegenstände in den Kanal, den er angefahren hat, hinein. Eine gesteuerte Rückhaltefunktion ist daher an dem Manipulator nicht erforderlich.

Erfindungsgemäß ist eine das erste Kanallager überbrückende Übergabevorrichtung vorgesehen, die von dem ersten Manipulator mit Gegenständen beschickbar ist und diese an den zweiten Manipulator übergibt. Die Übergabevorrichtung dient als Bypassweg für die Auslagerung von Gegenständen aus dem zweiten Lager. Der Vorteil der Übergabevorrichtung besteht darin, dass das gesamte kombinierte Warenlager eine einzige Auslagerungsvorrichtung aufweisen kann, zu der der zweite Manipulator sämtliche Gegenstände, die aus irgendeinem der Lager entnommen wurden, transportiert.

Die Übergabevorrichtung ist eine Vorrichtung, die Waren unterschiedlicher Konfiguration, Geometrie, Gewicht und Größe von der Eingabeseite des ersten Kanallagers zu dessen Abgabeseite transportieren kann. Es kann sich um eine Rutsche handeln oder um einen Förderer. Während der Bewegung kann eine Bremsvorrichtung oder am Abgabeende ein gesteuert bewegbares Anschlagelement vorgesehen sein.

Vorzugsweise sind das erste Kanallager und das zweite Kanallager auf entgegengesetzten Seiten eines Verfahrweges des ersten Manipulators angeordnet. Ein besonderer Vorteil besteht darin, dass die Tragfläche des ersten Manipulators eine Schrägfläche ist, die die gleiche Neigungsrichtung hat wie die Tragflächen der Kanallager, die als Schrägfachbodenregale ausgeführt sein können. Im Falle von Schrägfachbodenregalen kann die Tragfläche des Manipulators schräggestellt und auf die Kanalschräge abgestimmt sein.

Im Folgenden wird ein Ausführungsbeispiel der Erfindung unter Bezugnahme auf die Zeichnungen näher erläutert.

Es zeigen:
- Figur 1: eine schematische Draufsicht auf ein kombiniertes Warenlager gemäß der vorliegenden Erfindung und
- Figur 2: eine Teil-Ansicht aus Richtung des Pfeiles II in Figur 1.

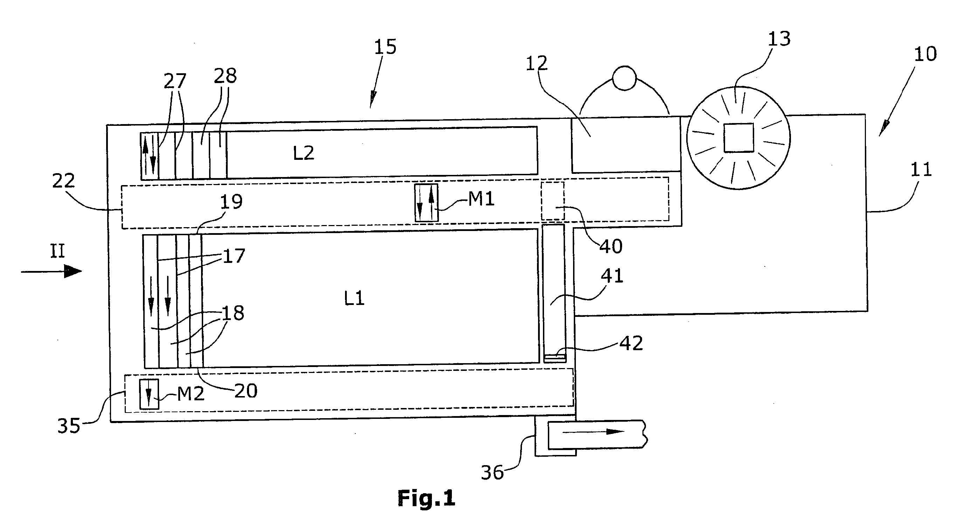

Gemäß Figur 1 ist eine Eingabestation 10 vorgesehen, die einen Warenannahmeautomaten 11 und eine Wareneingabevorrichtung 12 aufweist. Der Warenannahmeautomat und die Wareneingabevorrichtung entsprechen der Patentanmeldung EP 1 902 983 A2. Der Warenannahmeautomat 11 enthält eine Eingabestelle 13 zum ungeordneten Einwerfen von Waren, die anschließend vereinzelt, identifiziert und nacheinander einer Übergabestation zugeführt werden. Die Wareneingabevorrichtung dient zum manuellen Einlegen von Waren zum Zwecke des Einlagerns dieser Waren in die verschiedenen Lager.

In dem Lagerbereich 15 befindet sich ein erstes Kanallager L1, das aus einem Schrägfachbodenregal besteht. Dieses weist mehrere übereinander angeordnete Regalböden auf, deren Oberfläche durch Regalteiler 17 in Kanäle 18 unterteilt sind. Die Kanäle 18 haben Kanalböden 16 und verlaufen von einem Eingabeende 19 zu einem Abgabeende 20 des Kanals 18. Durch die Schräge der Kanalböden rutschen Gegenstände, die in das Eingabeende 19 eingeführt werden, durch Schwerkraft bis zum Abgabeende 20. Am Abgabeende 20 befindet sich ein Anschlag 21, so dass der unterste Gegenstand in dem betreffenden Kanal angehalten wird, bis er von dem zugehörigen Manipulator entnommen wird. Die nachfolgenden Gegenstände rutschen dann nach. Die Kanäle 18 können unterschiedliche Breiten haben. Durch Versetzen der Regalteiler 17 kann die Kanalbreite an die jeweils zu speichernden Gegenstände angepasst werden. Der Zentralrechner des Lagers sorgt dafür, dass in jedem Kanal gleiche Gegenstände eingeführt werden.

Nahe den Eingabeenden 19 der Kanäle 18 befindet sich der Verfahrweg 22 des ersten Manipulators M1. Der Verfahrweg 22 verläuft quer zur Richtung der Kanäle 18 entlang der gesamten Länge des ersten Lagers L1 und über diese hinaus bis in die Eingabestation 10 hinein. Der Manipulator M1 kann also bis in die Eingabestation 10 verfahren werden und dort Waren von der Wareneingabevorrichtung und/oder vom Warenannahmeautomaten entgegennehmen.

Der Manipulator M1 weist eine schräg verlaufende Tragfläche 23 auf, die die gleiche Neigungsrichtung hat wie die Kanäle 18. Der Manipulator M1 ist entlang des Verfahrweges 22 sowohl in der Länge als auch in der Höhe verfahrbar und kann somit vor das Eingabeende 19 eines jeden Kanals 18 gefahren werden, um einen Gegenstand von dem Manipulator M1 in den Kanal 18 einzuführen. An der Tragfläche 23 des Manipulators M1 ist ein gesteuerter Schieber 24 vorgesehen, der in Richtung der Pfeile bewegt werden kann, um den Gegenstand auf der Tragfläche 23 herauf oder herunter zu bewegen. Ein weiterer Schieber ist vorgesehen, um den Gegenstand über das obere Ende der Tragfläche 23 hinaus vorzuschieben.

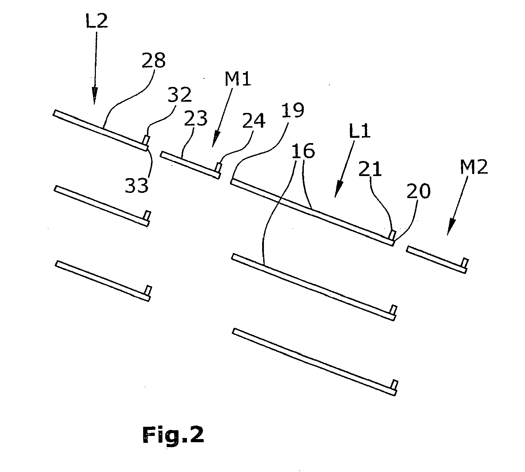

Der Manipulator M1 bedient die Eingabeseite des ersten Kanallagers L1. Auf der dem Kanallager L1 gegenüber liegenden Seite des Verfahrweges 22 ist ein zweites Kanallager L2 angeordnet, das ebenfalls ein mehretagiges Schrägfachbodenregal ist. Dieses weist zahlreiche, durch Trennwände 27 begrenzte Kanäle 28, auf. Die Kanäle 28 sind breiter als die Kanäle 18 des ersten Lagers L1 und kürzer. Sie sind nicht für eine bestimmte Packungsgröße vorgesehen, sondern dienen zur Aufnahme unterschiedlicher Packungen. Wie sich aus Figur 2 ergibt, haben die Kanalböden die gleiche Neigungsrichtung sowie auch den gleichen Neigungswinkel wie die Kanalböden der Kanäle 18. Das Kanallager L2 wird durch den selben Manipulator M1 bedient, der auch das Kanallager L1 befüllt. Während der Manipulator M1 das Kanallager L1 von oben her befüllt, befüllt und entleert er das Kanallager L2 von unten her. Der Schieber 24 schiebt einen auf der Tragfläche 23 liegenden Gegenstand auf den Kanalboden des Kanallagers L2 hoch. Der Gegenstand wird dann von dem Anschlag 32 am unteren Ende des Kanalbodens abgestützt und zurückgehalten. Zum Entnehmen des Gegenstandes aus dem Kanallager L2 greift ein aus dem Manipulator M1 ausfahrbarer Finger durch einen Schlitz im Boden des betreffenden Kanals 28. Der Manipulator M1 wird in diesem Zustand hochgefahren, wobei der Gegenstand durch den Finger angehoben wird und über den Anschlag 32 hinweg auf die Tragfläche 23 des Manipulators M1 gleitet. Das untere Ende des Kanals 28 bildet das Eingabe- und Abgabeende 33.

An das untere Abgabeende 20 der Kanäle des ersten Kanallagers L1 schließt sich der Verfahrweg 35 des zweiten Manipulators M2 an. Der zweite Manipulator M2 hat die selbe Schrägstellung wie die Kanalböden 16 des ersten Kanallagers L1. Er dient zur Übernahme der die Kanäle 18 verlassenden Gegenstände. Nach Übernahme eines Gegenstandes wird der Manipulator M2 entlang des Verfahrweges 35 zu einer Ausgabestation 36 verfahren. Dort können die Gegenstände von einem Förderer oder einer anderen Einrichtung übernommen werden.

Entlang des Verfahrweges 22 des ersten Manipulators M1 ist eine Übergabestation 40 vorgesehen, die der Manipulator M1 anfahren kann. Diese Übergabestation 40 befindet sich in Ausrichtung mit einer Übergabevorrichtung 41, die von der Übergabestation zum Verfahrweg 35 des zweiten Manipulators M2 führt. Die Übergabevorrichtung 41 ist eine Rutsche, ein Förderband oder ein sonstiger Förderer zum Befördern der Gegenstände, die der Manipulator M1 aus dem zweiten Kanallager L2 entnommen hat, zu dem zweiten Manipulator M2 zum Zwecke der Ausgabe. Am Auslassende der Übergabevorrichtung 41 befindet sich eine gesteuerte Fangvorrichtung 42 zum Anhalten der Gegenstände. Erst wenn der Manipulator M2 sich in der Übernahmeposition befindet, gibt die Fangvorrichtung 42 den Weg für die Übergabe der Gegenstände an den Manipulator M2 frei.

Zum Einlagern der Gegenstände werden die Gegenstände in die Wareneingabevorrichtung 12 oder den Warenannahmeautomaten 11 eingegeben. Die Gegenstände werden durch Lesen eines darauf angebrachten Barcodes identifiziert und vermessen, um die Größen, Längen, Breiten und Höhen zu ermitteln. Dann bestimmt der Rechner das Kanallager, in das die Einlagerung erfolgen soll sowie auch den betreffenden Kanal. Bei der Abgabe von Gegenständen aus dem kombinierten Warenlager ermittelt der Rechner den Kanal, in dem der angeforderte Gegenstand gelagert ist, und bewirkt die Steuerung der Manipulatoren in der Weise, dass der Gegenstand entnommen und an der Ausgabestation 36 zur Verfügung gestellt wird.

## Patentansprüche

1. Kombiniertes Warenlager mit einem ersten Kanallager (L1) zur Aufnahme von Gegenständen in einer Reihe in jeweils einem Kanal (18), der ein Eingabeende (19) und ein Abgabeende (20) aufweist, einem das erste Kanallager (L1) bedienenden ersten Manipulator (M1) zum Zuführen der Gegenstände zu den Eingabeenden (19) der Kanäle, wobei der erste Manipulator (M1) zusätzlich ein zweites Kanallager (L2) bedient, dessen Kanäle ein kombiniertes Eingabe- und Abgabeende (33) aufweisen,
**gekennzeichnet durch**
einen zweiten Manipulator (M2) zum Abnehmen der Gegenstände von den Abgabeenden (20) der Kanäle und zum Abtransportieren der Gegenstände, wobei eine das erste Kanallager (L1) überbrückende Übergabevorrichtung (41) vorgesehen ist, die von dem ersten Manipulator (M1) mit Gegenständen beschickbar ist und diese an den zweiten Manipulator (M2) übergibt.

2. Kombiniertes Warenlager nach Anspruch 1, **dadurch gekennzeichnet, dass** der erste Manipulator (M1) entlang eines Verfahrweges (22) bewegbar ist, dass das erste Kanallager (L1) zur einen Seite und das zweite Kanallager (L2) zur entgegengesetzten Seite des Verfahrweges 22 angeordnet ist.

3. Kombiniertes Warenlager nach Anspruch 1 oder 2, **dadurch gekennzeichnet, dass** das Kanallager (L1) ein Schrägfachbodenregal ist.

4. Kombiniertes Warenlager nach einem der Ansprüche 1 - 3, **dadurch gekennzeichnet, dass** das zweite Kanallager (L2) ein Schrägfachbodenregal ist.

5. Kombiniertes Warenlager nach einem der Ansprüche 1 - 4, **dadurch gekennzeichnet, dass** das erste und das zweite Kanallager (L1,L2) gleichgerichtete Neigungen haben.

6. Kombiniertes Warenlager nach Anspruch 1, **dadurch gekennzeichnet, dass** die Übergabevorrichtung (41) eine Rutsche zur Aufnahme von Gegenständen unterschiedlicher Größen ist, mit einer Bremsvorrichtung oder einer bewegbaren Anschlagvorrichtung (42).

7. Kombiniertes Warenlager nach einem der vorhergehenden Ansprüche, **dadurch gekennzeichnet, dass** der erste Manipulator (M1) eine Wareneingabevorrichtung (12) und/oder einen Warenannahmeautomaten (11) mit dem ersten Kanallager (L1) und dem zweiten Kanallager (L2) verbindet.

## Claims

1. A combined storage system for goods, comprising a first channel-type storage area (L1) for accommodating objects serially in respectively one channel (18), said channel having an insertion end (19) and a discharge end (20), said storage system further comprising a first manipulator (M1) servicing the first channel-type storage area (L1) and operative to feed the objects to the insertion ends (19) of the channels, said first manipulator (M1) additionally servicing a second channel-type storage area (L2), the channels of said second channel-type storage area comprising a combined insertion and discharge end (33),
**characterized by**
a second manipulator (M2) for fetching the objects from the discharge ends (20) of the channels and for carrying off the objects, and by a transfer device (41) bridging the first channel-type storage area (L1), said transfer device being adapted to be fed with objects by the first manipulator (M1) and to pass them over to the second manipulator (M2).

2. The combined storage system according to claim 1, **characterized in that** the first manipulator (M1) is movable along a moving path (22), and that the first channel-type storage area (L1) is arranged on one side and the second channel-type storage area (L2) is arranged on the opposite side of said moving path (22).

3. The combined storage system according to claim 1 or 2, **characterized in that** the first channel-type storage area (L1) is a shelf with inclined bins.

4. The combined storage system according to any one of claims 1 - 3, **characterized in that** the second channel-type storage area (L2) is a shelf with inclined bins.

5. The combined storage system according to any one of claims 1 - 4, **characterized in that** the first and second channel-type storage areas (L1,L2) are oriented at identical inclinations.

6. The combined storage system according to claim 1, **characterized in that** said transfer device (41) is a chute for receiving objects of different sizes and is provided with a brake device or a movable stopper device (42).

7. The combined storage system according to any one of the preceding claims, **characterized in that** the first manipulator (M1) is operative to connect a goods insertion apparatus (12) and/or a goods reception automat (11) to the first channel-type storage area (L1) and the second channel-type storage area (L2).

## Revendications

1. Entrepôt combiné comprenant un premier magasin à rayonnages compartimentés (L1) pour la réception d'objets dans une rangée située dans un rayonnage compartimenté (18) qui présente, à chaque fois, une extrémité d'entrée (19) et une extrémité de sortie (20), un premier manipulateur (M1) desservant le premier magasin à rayonnages compartimentés (L1), pour fournir les objets aux extrémités d'entrée (19) des rayonnages compartimentés, où le premier manipulateur (M1) dessert en outre un deuxième magasin à rayonnages compartimentés (L2) dont les rayonnages compartimentés présentent une extrémité d'entrée et de sortie (33) combinée,
**caractérisé**
**par** un deuxième manipulateur (M2) servant à prendre les objets provenant des extrémités de sortie (20) des rayonnages compartimentés et servant à transporter les objets, où il est prévu un dispositif de transfert (41) passant par-dessus le premier magasin à rayonnages compartimentés (L1), dispositif de transfert qui peut être chargé, avec des objets, par le premier manipulateur (M1), et qui transfère ces objets au deuxième manipulateur (M2).

2. Entrepôt combiné selon la revendication 1, **caractérisé en ce que** le premier manipulateur (M1) est mobile suivant une course (22), **en ce que** le premier magasin à rayonnages compartimentés (L1) est disposé sur un côté par rapport à la course (22), le deuxième magasin à rayonnages compartimentés (L2) étant disposé sur le côté opposé par rapport à ladite course.

3. Entrepôt combiné selon la revendication 1 ou 2, **caractérisé en ce que** le premier magasin à rayonnages compartimentés (L1) est un rayonnage à fonds de compartiments obliques.

4. Entrepôt combiné selon l'une quelconque des revendications 1 à 3, **caractérisé en ce que** le deuxième magasin à rayonnages compartimentés (L2) est un rayonnage à fonds de compartiments obliques.

5. Entrepôt combiné selon l'une quelconque des revendications 1 à 4, **caractérisé en ce que** le premier et le deuxième magasins à rayonnages compartimentés (L1, L2) ont des inclinaisons dirigées dans le même sens.

6. Entrepôt combiné selon la revendication 1, **caractérisé en ce que** le dispositif de transfert (41) est une goulotte servant à la réception d'objets de différentes tailles, ledit dispositif de transfert comprenant un dispositif de freinage ou un dispositif d'arrêt (42) mobile.

7. Entrepôt combiné selon l'une quelconque des revendications précédentes, **caractérisé en ce que** le premier manipulateur (M1) relie un dispositif (12) d'entrée des marchandises et/ou un automate (11) de réception des marchandises, au premier magasin à rayonnages compartimentés (L1) et au deuxième magasin à rayonnages compartimentés (L2).
